(19) Europäisches Patentamt
European Patent Office
Office européen des brevets

(11) Publication number: **0 186 327**
**B1**

(12) **EUROPEAN PATENT SPECIFICATION**

(45) Date of publication of patent specification: **25.10.89**

(51) Int. Cl.$^4$: **C 04 B 35/00**, C 04 B 35/58

(21) Application number: **85308661.9**

(22) Date of filing: **28.11.85**

(54) **Method of making a net shape sintered ceramic product.**

(30) Priority: **24.12.84 US 685374**

(43) Date of publication of application:
**02.07.86 Bulletin 86/27**

(45) Publication of the grant of the patent:
**25.10.89 Bulletin 89/43**

(84) Designated Contracting States:
**DE FR GB**

(56) References cited:
**EP-A-0 131 153**
**WO-A-84/01372**
**GB-A-1 410 362**
**US-A-2 847 314**
**US-A-3 998 917**
**US-A-4 443 394**

**CHEMICAL ABSTRACTS, vol. 104, no. 2, 13th January 1986, page 252, column 1, abstract no. 9696e, Columbus, Ohio, US; & JP - A - 60 122 768 (NIPPON SHOKUBAI K.K. CO., LTD.) 01-07-1985 (Cat. P,X)**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Beckwith, Elaine Cecilia**
**13716 Hamilton**
**Riverview Michigan 48192 (US)**
Inventor: **Ezis, Andre**
**23235 West River Road**
**Grosse Ile Michigan 48138 (US)**

(74) Representative: **Messulam, Alec Moses et al**
**A. Messulam & Co. 24 Broadway**
**Leigh on Sea Essex SS9 1BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 186 327 B1**

## Description

The invention relates to a method of making a net-shape, sintered ceramic product.

A desirable mode for making silicon nitride objects uses reaction bonding techniques disclosed in U.S. Patent 4,443,394, which utilizes a dry milling technique for preparing the powders. Such milling technique uniformly mixes the starting powder ingredients of silicon and oxygen-carrying agents and obtains the desired particle size distribution for eventual good packing density during cold-compaction; cold-compaction is usually carried out with pressures in the range of 1400—1500 psi. The cold-compacted preform is then subjected to a nitriding heating in which the silicon ingredients and oxygen-carrying agents are converted to silicon nitride and secondary phases; the nitrided object is then subjected to a sintering heat treatment to achieve full density. Unfortunately, this technique teaches the use of a powder mixture which provides insufficient cohesive strength to withstand higher pressure and higher speed compaction necessary to greater economy and net-shape processing.

There is need to be able to make a more economical fused powder ceramic body in net-shape form. Net-shape is used herein to mean that a ceramic powder body, after fusion heat treatment, will require little or no material removal or machining to assume the desired end product configuration or shape. But economical processing of net-shape fused powder bodies cannot be achieved without the use of high speed automatic equipment which place a severe strain on such bodies to maintain their integrity during processing. High speed automatic equipment is used herein to mean equipment of the type that can impart greater than $11.7\times10^3$ kPa (1700 psi) to the compaction of the powder body (such as $13.79\times10^4$—$17.93\times10^4$ kPa (20,000—26,000 psi), at impact rates in the range of 12—44 strokes/minute. Such high speed automatic equipment permits large scale economics to be obtained in the manufacturing operation. To be used with such high speed automatic equipment, the starting powders must have sufficient physical and chemical properties to be compacted, usually at room temperature, using pressures up to several tens of thousands of psi and punch speeds that are fractions of a second, while the compaction action moves the powder into a wide variety of shapes. At the same time, the powder must have the ability to maintain cohesiveness after compaction so the compacted body can be ejected intact from the equipment while still maintaining the desired shape tolerance. Without an adequate processing aid, powders compacted at high pressures and impact rates do not maintain their integrity, exhibit hairline cracks or laminations, have a low chip strength of 207—276 kPa (30—40 psi), and readily break by simple handling.

What is needed is a procssing aid, particularly in the form of a chemical binder, which can be mixed with the powders, which aid allows the powder mixture to be (a) cold-compacted at the aforementioned high pressures (i.e., above $10.34\times10^4$ kPa 15,000 psi), in an automatic press and ejected intact and without flaws therefrom, (b) not require any additional manufacturing steps other than the conventional cold-compaction and heat treatment for nitriding or sintering, and (c) not interfere with the chemical and physical properties of the ceramic article such as by contamination or alteration of the nitriding or sintering kinetics for the powder.

Binders have been used by the prior art in powder metallurgy techniques to enhance cold-compaction. The binder systems have included metal stearates (such as aluminum and zinc stearates), waxes (such as microcrystalline wax or halowax), organic acids (such as oleic or stearic acids), polyethylene glycols and polyvinyl alcohols. Each of these binder systems form only a mechanical mixture and not a true powder composite, and have proven to be deficient in one or more of the criteria that are a measure of this invention.

Aluminum stearate tends to interfere with the nitriding kinetics of making silicon nitride; that is, excessive amounts of free silicon become present resulting in lamination and defects associated with such free silicon presence in lamination, is solid at room temperature (rather than a viscous liquid) hindering sound cold-compaction at pressures in excess of $10.34\times10^4$ kPa (15,000 psi). Zinc stearate permits metal contamination, inhibits crystallization of desirable second phases in the silicon nitride matrix, degrades high temperature mechanical properties of the silicon nitride product, and permits flaws in the compact at pressure above $10.34\times10^4$ kPa (15,000 psi).

Microcrystalline wax is solid at room temperature and does not become a fluid until a temperature of approximately 190°C is reached, which is well in excess of room temperature, it cannot be compacted at room temperature with pressures equal to or greater than $10.34\times10^4$ kPa (15,000 psi) without lamination, and it renders insufficient cohesive strength to the system to tolerate high speed cold-compaction. Halowax is a chlorine-containing binder which inhibits the crystallization of second phases during the nitriding of silicon powders (this is brought out more fully in the article by D. R. Clarke, entitled "Densification of Silicon Nitride: Effect of Chlorine Impurities", Journal of the American Ceramics Society, C21—22, 1982).

Oleic acid has a molecular weight which is much too low (in the neighborhood of 282.5 gm/mol) which does not entitle it to provide strong, cohesive forces to bind the silicon particles together during compaction and fails to compact soundly at pressures greater than $10.34\times10^4$ kPa (15,000 psi). Stearic acid is also solid at room temperature (having a melting point of approximately 71°C), it has a very low molecular weight (284.5 gm/mol), thus not allowing it to have a sufficiently strong cohesive force to bind the powder system, and it fails at cold-compaction pressures equal to or greater than $10.34\times10^4$ kPa (15,000 psi).

Polyethylene glycol (such as Carbowax 600) has too low a molecular weight to be effective as a binder, it requires excessive quantities (at least 6% by weight of the mixture), it lowers the alpha silicon nitride content during nitriding, it and the powder system can be compacted up to pressures of less than $6.9\times10^4$ kPa (10,000 psi) but do not have sufficient green strength for use in high speed automatic pressing equipment, the compacted powder bodies laminate during a nitriding cycle due to rapid expansion of gases in a burnout, and it obtains poor mixing efficiency and segregates areas of high and low oxygen-carrying agents (such as yttrium and aluminum concentrations).

Polyvinyl alcohol is disadvantageous because it is solid at room temperature, it lacks cohesive forces and lubricating ability, the compacted body with it laminates and is easily broken upon ejection from an automatic press using pressure above $6.9\times10^4$ kPa (10,000 psi), it has a boron impurity which contaminates the article and degrades the high temperature properties (such as high temperature oxidation).

Acrylic resins (or latex) have been mentioned as possible binders in a silicon powder system for making silicon nitride (see Australian Patent 73,024 and U.S. Patent 3,839,540). However, these patents do not teach the nature of the acrylic resin. The powders are cold-compacted only by use of rolls at low pressures and speeds and do not process net-shape bodies. Thus, the problems of this invention are not encountered. Acrylic resin is a generic term for acrylic acid or derivatives of acrylic acid that have been polymerized. A latex is a generic term for an emulsion of small polymeric particles in water. An acrylic resin of acrylic acid (polyacrylic acid) fails to permit the powders to be cold-compacted at high speeds and high pressures due to inadequate glass transition temperature, cohesive energy and surface tension. Polyacrylic acid is a solid at room temperature and does not properly "wet" the powder to form a true powder composite needed for high speed and high pressure compaction. The use of a latex fails to permit the powders to be cold-compacted at high speeds and high pressures and also interferes with the nitriding and sintering kinetics of $Si_3N_4$ by altering the silicon, silicon dioxide and hydrogen content; silicon powder is hydrolyzed by water resulting in the formation of silicon dioxide and the evolution of hydrogen gas according to equation (1).

$$Si+2H_2O\rightarrow SiO_2+2H_2\uparrow \qquad (1)$$

WO84/01372 discloses a method of making a compacted body useful in the fabrication of a fully densified silicon nitride ceramic. Silicon powder, oxygen carrying agents and a dry lubricant are admixed. The admixture is milled and then formed into a compact which can be nitrided and hot pressed to form a fully dense silicon nitride object. The dry milling lubricant is selected from the group consisting of polybutylacrylate, poly 2-ethylhexylacrylate and polyisobutylacrylate.

According to the present invention, there is provided a method of making a net-shape, sintered ceramic product without material removal or cutting, comprising; (a) forming a composite of a ceramic or ceramic-forming silicon containing powder with sufficient oxygen-carrying agents for forming desired secondary phases for the ceramic, and 2—3.5% by weight of a processing aid in the form of a polymerized acrylate or polymerized mixed acrylate/methacrylate monomers having a molar cohesive energy of $29.3\times10^3$—$8.37\times10^4$ J/mol (7000—20,000 cal/mol), a $T_g$ of at least 50° below room temperature, a number average molecular weight of 4000—20,000, and a surface tension of less than or equal to 35 mN/m (35 dyne/cm) said oxygen carrying agents comprise $Y_2O_3$ in an amount of 6.2—18.1% by weight of the powder mixture, $Al_2O_3$ in an amount of 1.2—6.0% by weight of the powder mixture and $SiO_2$ in an amount of 1—4.0% by weight of silicon; (b) compacting said composite at room temperature at a pressure in excess of $10.34\times10^4$ kPa (15,000 psi), and at an impact rate of 12—44 strokes/minute to form a compacted preform with a net shape; and (c) thermally treating said compacted preform to form a substantially fully dense ceramic body in said net-shape.

The aid permits the resultant ceramic object formed from such powders to remain substantially unaltered with respect to chemical/physical properties.

The polymeric processing aid comprises a polymerized acrylate or mixed acrylate/methacrylate monomers which have been polymerized, the polymer being selected to have a glass transition temperature of at least 50°C below room temperature, a molar cohesive energy of $29.3\times10^3$—$8.37\times10^4$ J/mol (7000—20,000 cal/mol), a surface tension less than 35 mN/m (35 dyne/cm), and a number average molecular weight of $27.58\times10^3$—$13.79\times10^4$ kPa. The monomers which have been found useful in response to such definition include: methylacrylate, butylmethacrylate, N-butylacrylate, 2-ethyl hexyl acrylate, hydroxy propyl methacrylate, isobutylacrylate, lauryl methacrylate, isodecyl methacrylate, sec-butylacrylate, ethyl acrylate, ethoxy ethyl acrylate, and glycidal methacrylate.

The method preferably comprises forming a composite of ceramic or ceramic-forming powders with sufficient oxygen-carrying agents for forming desired secondary phases for the ceramic, along with 2—3.5% by weight of the polymeric processing aid above described. The mixture is then subjected to high speed cold-compaction at pressures in excess of $10.34\times10^4$ kPa (15,000 psi) with an impact rate of 12—44 strokes/minute to form a net-shape body. The compacted and ejected cold-pressed body is heat treated to form a fully dense, net-shape $Si_3N_4$ object. Preferably, the net-shape for the compacted preform is within .076—.25 cm (.003—.01 inch) tolerance of the heat treated body, except for 12% average shrinkage. Preferably, the heat treatment is nitrided at a temperature of 1090—1430°C (1994—2610°F) for a period of time sufficient to (a) form the desired amount of yttrium silicon oxynitride (it is preferable that the yttrium

silicon oxynitride consist of at least 75% of the $Y_{10}Si_6O_{24}N_2$ phase, and that the alumino-silicate is amorphous and resides as a thin coating on the grains of the silicon nitride and yttrium silicon oxynitride), and (b) provides at least 99.5% conversion of the silicon to silicon nitride. It is preferred that the sintering be carried out at temperature level of 1650—1750°C (3002—3182°F) over a time period of 0.5—12 hours.

Description of the drawings

Figure 1 is a photograph of a nitrided powder preform fabricated by use of aluminum stearate as a processing aid during cold-compaction, the photograph shows severe lamination and presence of free silicon characteristic of the prior art; the photograph was taken at 8× magnification.

Figure 2 is a photograph of a nitrided powder preform which was made using Carbowax 600 as a processing aid for cold-compaction in accordance with the prior art; the photograph shows undesirable segregated areas of high and low yttrium and aluminum concentrations; the photograph was taken at 15× magnification.

Figure 3 is a photograph of a nitrided powder preform made in conformity with this invention using a polymer of 85% 2-ethyl hexyl acrylate and 15% hydroxy propyl methacrylate as a processing aid, the photograph shows homogeneous nitriding and the absence of lamination; the photograph was taken at 15× magnification.

Detailed description and best mode

This invention teaches that the manufacture of silicon nitride cutting tools can be greatly reduced in cost by sintering net-shape nitrided preforms, such net-shape preforms being the result of large scale, high speed, cold-pressing operation of a powder mixture in which a polymeric processing aid is employed to maintain integrity and cohesiveness of the net-shape powder preform during such treatment.

The polymeric processing aid is a polymerized acrylate or a mixed acrylate/methacrylate monomer, which polymerized monomer or polymerized combination of monomers is selected to exhibit: (a) a glass transition temperature of at least 50°C below room temperature, (b) a molar cohesive energy of $29.3\times10^3$—$8.37\times10^4$ J/mol (7000—20,000 cal/mol), (c) a number average molecular weight in the range 4000—20,000, and (d) a surface tension less than or equal to 35 mN/m (35 dyne/cm).

It is necessary to have the proper combination of glass transition temperature, molecular weight, molar cohesive energy, and surface tension in the processing aid in order to have a viscous liquid physical form at room temperature with the desired polarity, adhesion and motion on the molecular scale to "wet" the powder particles and chemically bind them together. This will result in a true powder composite and must be distinguished from just a mechanical mixture. A powder composite is necessary to permit high speed and high pressure cold-compaction and obtain a sound ceramic product without flaws or undesired chemical physical properties. In addition, it is desirable that such processing aid exhibit a high purity with less than 0.5% metal, boron or halide contamination—good degradation characteristics, so that it can be degraded during normal, subsequent nitriding and be nonhygroscopic.

Processing aids with these characteristics enable cold-compaction of ceramic or ceramic-forming powders at ambient temperatures and at high pressures (in excess of $10.34\times10^4$ kPa (15,000 psi) and impact rates of 12—44 strokes/minute, and will withstand ejection from such automatic presses without injuring the integrity of the pressed body. In addition, such pressing aids will not alter the chemical or physical properties of the resultant ceramic object to be formed from such powders.

Specific examples of monomers which, when polymerized or proportioned as a mixture and polymerized, meet the above characteristics, include: methylacrylate, butylmethacrylate, N-butylacrylate, 2-ethyl hexyl acrylate, hydroxy propyl methacrylate, isobutylacrylate, lauryl methacrylate, isodecyl methacrylate, sec-butylacrylate, ethyl acrylate, ethoxy ethyl acrylate, and glycidal methacrylate.

A preferred mode for making such polymeric processing aid comprises adding T-butylperoctoate in an amount of .75 gm (or .5 weight percent of the monomer mixture) to a dropping funnel containing a mixture of hydroxy propyl methacrylate (in an amount of 22.5 gm or 15 weight percent of the mixture) and 2-ethylhexylacrylate (in an amount of 127.5 gm or 85 weight percent of the mixture). This mixture is then added drop-wise to refluxing toluene (in an amount of 150 gm), at a temperature of 100—110°C, contained in a 1000 milliliter 3-neck reaction flask equipped with a Teflon stirrer and a nitrogen inlet/outlet system. The mixture is refluxed for one hour after monomer addition is completed. The entire flask is placed in an ice water mixture and cooled to room temperature. The resulting solution is then coagulated into 1000 milliliters of methanol contained in a 2000 milliliter beaker in order to remove any unreacted monomer. The decantant is poured off and the remaining polymer is washed four times with methanol. The residual methanol is evaporated on a rotary evaporator until the milky-white polymer becomes a viscous, clear liquid.

The resulting clear, viscous liquid polymer has a glass transition temperature of −70°C and a number average molecular weight of 9000, and contains hydroxy functionality. The molar cohesive energy of such polymer is $50.24\times10^3$—$64.9\times10^3$ J/mol (12,000—15,000 cal/mol), has a surface tension of less than 35 mN/m (35 dyne/cm), has less than 0.5% contamination of metal, boron or halide elements, and is nonhygroscopic.

This polymer is importantly useful in a new method of making a net-shaped, heat-fused ceramic product with an ultra-low amount .076—.25 cm (.003—.010 inch) material removal or cutting. Such method

comprises (a) mixing a ceramic or ceramic-forming powder with oxygen-carrying agents powders and 2—3.5% by weight of a processing aid in the form of a polymerized acrylate or polymerized mixed acrylate/methacrylate monomers having a molar cohesive energy of $29.3\times10^3$—$8.37\times10^4$ J/mol (7000—20,000 cal/mol), $T_g$ of at least 50°C below room temperature, and a number average molecular weight of 4000—20,000, and a surface tension less than 35 mN/m (35 dyne/cm), (b) the mixture is compacted at room temperature at a pressure in excess of $13.79\times10^4$ kPa (20,000 psi) and at an impact rate of 12—44 strokes/minute to form a body with a net shape; and (c) thermally treating the body to form a substantially fully dense ceramic product in said net shape. Preferably, the ceramic or ceramic-forming powder is silicon, and the oxygen-carrying agents are 6.2—18.1% $Y_2O_3$ (by weight of the powder mixture), 1.2—6.0% $Al_2O_3$ (by weight of the powder mixture), 1—4.0% $SiO_2$ (by weight of the silicon) ($SiO_2$ being usually present as a layer on the silicon metal particles); the oxygen-carrying agents and excess silicon are effective to form 4—17% silicon yttrium oxynitride (normalized for conversion of silicon to silicon nitride) (at least 75% of which is in the $Y_{10}Si_6O_{24}N_2$ phase) and the remainder any yttrium silicon oxynitride that is formed from an $SiO_2$ component, and a small portion of an amorphous aluminum-containing silicate and up to 0.5% of silicon and unreacted $Y_2O_3$. The resultant ceramic after heat treating the above mixture is silicon nitride.

A preferred mode for carrying out such method comprises mixing 2000 gm of silicon powder (85.8 weight percent of powder mixture), 278 gm of yttria (11.9 weight percent of powder mixture), 53 gm of alumina (2.27 weight percent of powder mixture), and 72 gm of the polymer processing aid in the form of polyethylhexylacrylate/hydroxy propyl methacrylate (85/15 weight ratio) (3.0 weight percent of total powder mixture).

The usable range for the oxygen-carrying agents is yttria in the amount of 6.2—18.1% by weight of the mixture or 4—12% by weight of the mixture normalized to $Si_3N_4$, alumina in the amount of 0.75—4.0% by weight of the mixture normalized to $Si_3N_4$, and silicon dioxide in the amount of 1—4.0% by weight of the silicon. Normalizing means the amount present after silicon is converted to $Si_3N_4$. The $SiO_2$ component is essential as a component of the system to form the yttrium silicon oxynitride, thereby, by definition, eliminating the $Y_2O_3/Si_3N_4$ (N-melilite phase); the $SiO_2$ is usually present as an oxide surface coating on the silicon powder grains, but can be added separately if such oxide content is too low or uncontrollable.

Silicon is typically selected to have a 98% or greater purity and a starting average particle size of 2.5—3 microns with no particles exceeding 10 microns. The major trace metal contaminants experienced with such purity include, as a maximum: Fe—1.0%, Al—.5%, Mn—0.09%, and Ca—0.02%. Nonmetallic contaminants include, as a maximum: carbon—.05%, and $O_2$—less than 2% (after milling). Yttria is selected to have a purity of at least 99.99% with an average crystal size of .04 microns (438 angstroms). Alumina is selected to have a purity of at least 99.5% with an average particle size of .3—.5 microns.

The mixture is typically comminuted and blended by being charged into an inert milling jar along with grinding media which may be in the form of Burundum cylinders (85% $Al_2O_3$ and 11% $SiO_2$, 2% MgO, 1.2% CaO, .8% of [$TiO_2$, $Fe_2O_3$, $Na_2O$, $K_2O$] and milled for 48 hours at 64 rpm. The mixture is separated from the media by use of a #10 mesh screen. The milling is preferably dry, but can be wet, with some accompanying disadvantages. The yttria should be in a reactive form with a high surface area and small crystalline size. The resulting milled mixture will have at least 50% with an average particle size of about 2 microns, and 90% with an average particle size of less than 8 microns. The oxygen level after milling in air will be increased to 1.5 weight percent of the silicon and be present as an oxide coating on the silicon in an amount of about 3.0 weight percent. The ratio of $Y_2O_3/SiO_2$ is controlled to be in the range of 1—12 and preferably about 4.

A measured quantity of the milled mixture is loaded into die arrangement for pressing at $17.23\times10^4$ kPa (25,000 psi) and at an impact rate of 12—44 strokes/minute to form a net-shape preform powder cutting tool compact having a size of 3.74 cms square×.57 cms (0.580 inch square×0.224 inch thickness, which is +.076—.25 cm (+.003—.010 inch), within dimensional tolerances of the fully useful, fully densified cutting tool product. This tool product would have a blank designation of SNR-430. The only difference between the net-shape preform and the ultimate final fused product is compensation for 12% average shrinkage that may take place during heat fusion. The equipment used is a Mohr high speed automatic compaction press.

The net-shape powder compact is then nitrided by heating in a nitrogen atmosphere to produce a silicon nitride comprising net-shape body consisting of $Si_3N_4$, silicon yttrium oxynitride (in an amount of 10—11% by weight of the object), .3—3.0% silicate (by weight of the body), up to .5% by weight of free silicon and unreacted oxides. To carry out the nitriding heating, the compact was placed in an enclosed furnace, preferably evacuated to a pressure of less than one micron, and heated at a fast rate, i.e., 500°F (280°C)/hr to 1200°F (649°C)/hr. The furnace is then filled with a gaseous mixture consisting of 72% by weight nitrogen, 3% hydrogen and 25% helium at a pressure of about 18.6 kPa (2.7 psig). The total $O_2$ and $H_2O$ content in such gaseous mixture is less than 4 ppm. The temperature of the furnace is then increased, in steps, from 1200 to 1700°F (926°C) at 500°F/hr, and then to 2000°F/hr (1093°C) at 200°F/hr (111°C/hr), and to 2000—2600°F (1093—1427°C) at a slower rate. The temperature is held constant thereafter. Fresh nitrogen is intermittently supplied to the furnace to replace the nitrogen consumed in forming $Si_3N_4$ and the oxynitrides. Nitrogen is added when the pressure drops below 16.5 kPa (2.4 psig) and brought back up to maximum pressure of 18.6 kPa (2.7 psig). The temperature is held constant while replenishment is taking place, but is increased when the pressure remains above 16.5 kPa (2.4 psig) for a predetermined period of

time. When the nitriding cycle is completed (i.e., the system does not require additional nitrogen), the material may be cooled to room temperature at any rate, preferably 250°F/hr (140°C/hr).

The net-shape nitrided preform is then sintered to yield a fully dense cutting tool insert with 11% of yttrium silicon oxynitride and approximately 3% alumino-silicate and beta $Si_3N_4$. Such sintering can be carried out by heating in a certain sequence up to a temperature range of 1650—1750°C (3002—3182°F) for a period of 5—12 hours. Said furnace uses $N_2$ gas. Upon completion of the sintering operation, the resulting net-shape sintered product will have a density of 97% theoretical. The net-shape product will require no material removal to function as a cutting tool blank, except for .076—.25 cm (.003—.010 inch) minimal grinding stock removal.

Examples

To prove the advantages of the above polymerized processing aid and the process of using it, several samples were prepared. Each net-shape preform was prepared in accordance with the general measurements and quantities of the preferred example disclosed earlier and the mixture was subjected to dry milling in accordance with the description of this application. The processing aid was varied among the several examples, and each was added in an amount as a percent of the mixture as indicated in Table I, except that sample 1 contained no processing aid. Each mixture was subject to high pressures at high impact rates to form a powder preform. The pressure at which hair-line cracks or laminations began to appear in the ejected preform is listed under compaction behavior. All failed at pressure below 15,000 psi, except samples 2—4 which showed no flaws at pressures as high as $17.92\times10^4$ kPa (26,000 psi).

The physical and chemical characteristics of the processing aid used is indicated; only those samples which used a processing aid that had the required $T_g$, cohesive energy, molecular weight and surface tension provided an aid which was a viscous liquid at room temperature, so necessary to this invention. The resulting net-shape product, after nitriding and sintering, was analyzed for the various physical and chemical characteristics as listed in Table I, and was evaluated as to its mixing characteristics, compaction behavior, ability to not interfere with the nitriding process, and the sintering process. All of the samples were prepared in a net-shape preform size of 3.74 cm square×.57 cm (.580 inch square×.224 inch) thickness, except for sample 1 which was processed as a conventional 6 inch diameter plate having a 1.5 cm (.6 inch) thickness (only a plate cold-compacted at $9.65\times10^3$ kPa (1400 psi) was nitrided and sintered according to the preferred mode of this invention to demonstrate reference values for physical/chemical properties). Samples 8, 10 and 11 were added by wet milling in acetone after the powder mixture was dry milled.

The only samples which did not fail on cold-compaction in the indicated pressure range and did eject intact were Samples 2 through 4. Sample 5 and 6 were defective because of too high a glass transition temperature. Sample 7 was defective because it was not a viscous liquid at room temperature and had much too low molecular weight. Sample 8 was a solid at room temperature; sample 9 was a solid at room temperature, had poor chemical and physical properties of the compact and laminated. Sample 10 had a very low final density. Samples 11, 12 and 13 were not a viscous liquid at room temperature and were not homogeneous. Samples 5 to 8 and 11 to 13 were not heat treated for analysis since the preform failed due to the presence of flaws from high pressure compaction. Specimens compacted at lower pressures (as indicated) were processed for heat treatment to show the influence on chemical/physical properties due to the presence of the aid; the specimen for samples 9 and 10, which failed at the indicated pressures, was not used for heat treatment.

TABLE I

| Sample # | 1 | 2 | 3 | 4 | 5 | 6 |
|---|---|---|---|---|---|---|
| Pressing aid | None | Polymer of 2-ethyl hexyl acrylate | Polymer of 85% 2-ethyl hexyl acrylate & 15% hydroxy propyl methacrylate | Polymer of 100% n-butyl acrylate | Polymer of 100% butyl methacrylate | Polymer of 100% poly-methacrylate |
| Amount of addition | — | 3% | 3% | 3% | 3% | 5% |
| $T_g$°C | — | −81° | −70° | −54° | +20° | +8° |
| Cohesive energy (cal/mol) | — | 9000—12,000 ($37.7\times10^3$—$50.2\times10^3$ J/mol) | 11,000—15,000 ($46.1\times10^3$—$62.8\times10^3$ J/mol) | 9200—9900 ($38.5\times10^3$—$41.5\times10^3$ J/mol) | 10,400—11,100 ($43.5\times10^3$—$46.5\times10^3$ J/mol) | 6000—7600 ($25.1\times10^3$—$31.8\times10^3$ J/mol) |
| Physical form at rm. temp. | — | viscous liquid | viscous liquid | viscous liquid | viscous liquid | viscous liquid |
| Molecular wt. Mn(av) | — | 5800 | 9000 | 10,000 | 15,000 | 8000 |
| Melting point (°C) | — | — | — | — | — | — |
| Surface tension (dyne/cm) (mN/m) | — | <28 | <35 | <28 | — | 35 |
| Mix characteristics —homogeneous —hygroscopic | yes no | yes no | yes no | yes no | yes no | yes no |

TABLE I (continued)

| Sample # | 1 | 2 | 3 | 4 | 5 | 6 |
|---|---|---|---|---|---|---|
| Compaction behavior<br>—range (psi) | >1700 (fail) | 2000—26,000 (good) | 2000—25,000 (good) | 2000—23,000 (good) | >3900 (fail) | >4100 (fail) |
| —eject intact | — | yes | yes | yes | no | no |
| —lub. die wall | no | yes | yes | yes | no | no |
| Nitriding prop. (chem/phys)<br>—alpha $Si_3N_4$ | ≥80% | 92% | 90% | 90 | — | — |
| —% $Y_{10}$ phase of oxynitride in nitrided object | ≥75% | 89% | 88% | 85 | — | — |
| —density of theoretical | {42% at 1400 psi} ($9.7\times10^3$ kPa) | 74% at 25,000 psi ($17.23\times10^4$ kPa) | 73% at 24,500 psi ($16.9\times10^4$ kPa) | 70% at 23,000 psi ($15.9\times10^4$ kPa) | — | — |
| —lamination after $N_2$ | — | no (see Fig. 3) | no | no | — | — |
| Sinter property (density as % of theor.) | ≥97% | 98% | ≥97% | ≥97% | — | — |

TABLE I (continued)

| Sample # | 7 | 8 | 9 | 10 | 11 | 12 | 13 |
|---|---|---|---|---|---|---|---|
| Pressing aid | Oleic acid | Stearic acid | Aluminum stearate | Poly-ethylene glycol #1 | Poly-ethylene glycol #2 | Mico-crystal-line wax | Acrylic resin (polyacrylic acid) |
| Amount of addition | 3% | 4% | 3.5% | 6% | 5% | 3% | 3% |
| $T_g$°C | — | — | — | — | — | — | 106 |
| Cohesive energy (cal/mol) | — | — | — | — | — | — | 5100 ($2135\times10^3$ J/mol) |
| Physical form at rm. temp. | fluid liquid | solid | solid | fluid liquid | soft solid | wax | solid |
| Molecular wt. or Mn (av) | 282.5 g/mol | 284.5 g/mol | 877.4 g/mol | 600 | 1450 | — | — |
| Melting point (°C) | 16° | 71° | 103° | 20—26° | 43—46° | 190° | — |
| Surface tension (dyne/cm) | — | — | — | — | — | — | 41 |
| Mix characteristics<br>—homogeneous<br>—hygroscopic | <br>yes<br>no | <br>yes<br>— | no (see below)<br><br>— | no (see below) | <br>no | <br>no<br>— | <br>no<br>— |

TABLE I (continued)

| Sample # | 7 | 8 | 9 | 10 | 11 | 12 | 13 |
|---|---|---|---|---|---|---|---|
| Compaction behavior —range (psi) | ≥2800 (fail) | >2500 (fail) | >3200 (fail) | >12,000 (fail) | >6800 (fail) | ≥3100 (fail) | >3000 (fail) |
| —eject intact | no | no | no (see below) | no | no | no | no |
| —lub. die wall | yes | no | no | no | — | — | — |
| Nitriding prop. (chem/phys) —alpha $Si_3N_4$ | — | — | 65% (free Si present) see Fig. 1 of nitrided preform pressed at 1400 psi | 85 | — | — | |
| —% $Y_{10}$ phase of oxynitride in nitrided object | — | — | — | 65% at 10,000 psi ($6.9\times10^4$ kPa) | — | — | |
| —density of theoretical | — | — | — | 68% at 10,000 psi ($6.9\times10^4$ kPa) | — | — | |
| —lamination after $N_2$ | — | — | yes | — | — | — | |
| Sinter prop. (density as % of theor.) | — | — | — | 91 | — | — | |

**Claims**

1. A method of making a net-shape, sintered ceramic product without material removal or cutting, comprising; (a) forming a composite of a ceramic or ceramic-forming silicon containing powder with sufficient oxygen-carrying agents for forming desired secondary phases for the ceramic, and 2—3.5% by weight of a processing aid in the form of a polymerized acrylate or polymerized mixed acrylate/methacrylate monomers having a molar cohesive energy of $29.3\times10^3$—$8.37\times10^4$ J/mol (7000—20,000 cal/mol), a $T_g$ of at least 50° below room temperature, a number average molecular weight of 4000—20,000, and a surface tension of less than or equal to 35 mN/m (35 dyne/cm) said oxygen carrying agents comprise $Y_2O_3$ in an amount of 6.2—18.1% by weight of the powder mixture, $Al_2O_3$ in an amount of 1.2—6.0% by weight of the powder mixture and $SiO_2$ in an amount of 1—4.0% by weight of silicon; (b) compacting said composite at room temperature at a pressure in excess of $10.34\times10^4$ kPa (15,000 psi), and at an impact rate of 12—44 strokes/minute to form a compacted preform with a net shape; and (c) thermally treating said compacted preform to form a substantially fully dense ceramic body in said net-shape.

2. A method as claimed in Claim 1, in which said thermal treatment comprises nitriding of said net-shape compacted preform to form a nitrided body consisting of silicon nitride and yttrium silicon oxynitride (75% as $Y_{10}$ phase), and then sintering of said nitrided body at a temperature sufficient to form said substantially fully dense body.

3. A method as claimed in Claim 2, in which said ceramic-forming powder is silicon.

4. A method as claimed in Claim 3, in which said thermal treatment comprises nitriding at a temperature of 1090—1430°C (1994—2610°F) for a period of time to (a) form crystalline second phases consisting of yttrium silicon oxynitride, and (b) silicon nitride, and (c) a thin alumino-silicate coating on the grains of silicon nitride.

5. A method as claimed in Claim 4 in which said thermal treatment further comprises sintering at 1650—1750°C (3002—3182°F) for a time to substantially fully densify and fuse the silicon nitride.

**Patentansprüche**

1. Verfahren zur Herstellung eines netzförmigen keramischen Sinterprodukts ohne Materialentfernung oder Schneiden, darin bestehend, daß man (a) aus einem keramischen oder keramikbildenden, Silizium enthaltenden Pulver mit genügend Sauerstoffträgern zur Bildung für die Keramik erwünschter sekundärer Phasen und 2—3,5 Gew.-% einer Verarbeitungshilfe in Form eines polymerisierten Acrylats oder polymerisierter gemischter Acrylat-/Methacrylatmonomeren mit einer molaren Kohäsionsenergie von $29,3 . 10^3$—$8,37 . 10^4$ J/mol (7000—20000 cal/mol), einer $T_g$ mindestens 50° unterhalb Raumtemperatur, einem zahlenmittleren Molekulargewicht von 4000—20000 und einer Oberflächenspannung von weniger als oder gleich 35 mN/m (35 Dyn/cm) einen Verbundstoff bildet, wobei besagte Sauerstoffträger aus $Y_2O_3$ in einer Menge von 6,2—18,1 Gew.-% auf Pulvergemisch, $Al_2O_3$ in einer Menge von 1,2—6,0 Gew.-% auf Pulvergemisch und $SiO_2$ in einer Menge von 1—4,0 Gew.-% Silizium bestehen, (b) besagten Verbundstoff bei Raumtemperatur bei einem Druck oberhalb $10,34 . 10^4$ kPa (15000 psi) und einer Schlagzahl von 12—44 Hüben/Minute verdichtet, um einen netzförmigen verdichteten Vorformling zu bilden, und (c) besagten verdichteten Vorformling hitzebehandelt, um einen weitgehend volldichten keramischen Körper in besagter Netzform zu bilden.

2. Verfahren nach Anspruch 1, worin besagte Hitzebehandlung darin besteht, daß man besagten netzförmigen verdichteten Vorformling nitriert, um einen aus Siliziumnitrid und Yttriumsiliziumoxynitrid (75% als $Y_{10}$-Phase) bestehenden nitrierten Körper zu bilden und dann diesen bei einer Temperatur sintert, die zur Bildung des besagten im wesentlichen volldichten Körpers ausreicht.

3. Verfahren nach Anspruch 2, worin besagtes kermikbildende Pulver Silizium ist.

4. Verfahren nach Anspruch 3, worin besagte Hitzebehandlung darin besteht, daß man bei einer Temperatur von 1090—1430°C (1994—2610°F) eine gewisse Zeit lang nitriert, um (a) aus Yttriumsiliziumoxynitrid bestehende, kristalline zweite Phasen, (b) Siliziumnitrid und (c) eine dünne Aluminosilikatschicht auf den Siliziumnitridkörnern zu bilden.

5. Verfahren nach Anspruch 4, worin besagte Hitzebehandlung ferner darin besteht, daß man eine gewisse Zeit lang bei 1650—1750°C (3002—3182°F) sintert, um das Siliziumnitrid weitgehend völlig zu verdichten und verschmelzen.

**Revendications**

1. Procédé de fabrication d'un produit en céramique fritté à forme nette sans retrait ou coupe de matériau, comprenant les étapes consistant: (a) à former un matériau composite à partir d'une poudre de céramique ou formant une céramique, contenant du silicium avec une quantité suffisante d'agents oxygénés pour former des phases secondaires requises dans la céramique, et de 2 à 3,5% en poids d'un agent de fabrication sous la forme d'un acrylate polymérisé ou d'un mélange de monomères d'acrylate et de méthacrylate polymérisés, ayant une énergie molaire de cohésion de $29,3\times10^3$ à $8,37\times10^4$ J/mole, une température de transition vitreuse ($T_g$) d'au moins 50°C en dessous de la température ambiante, un poids moléculaire moyen en nombre de 4000 à 20 000 et une tension superficielle inférieure ou égale à 35 mN/m,

ces agents oxygénés comprenant $Y_2O_3$ selon une quantité de 6,2 à 18,1% en poids par rapport au mélange pulvérulent, $Al_2O_3$ selon une quantité de 1,2 à 6,0% en poids par rapport au mélange pulvérulent et $SiO_2$ selon une quantité de 1 à 4,0% en poids par rapport au silicium; (b) à compacter ce matériau composite à la température ambiante et sous une pression supérieure à $10,34 \times 10^4$ kPa et à une cadence de choc de 1·2 à 44 coups/minute pour former une ébauche compactée ayant une forme nette; et (c) à traiter à chaud cette ébauche compactée pour former un corps en céramique à peu près entièrement dense avec ladite forme nette.

2. Procédé selon la revendication 1, dans lequel ledit traitement thermique comprend la nitruration de l'ébauche compactée à forme nette pour former un corps nitruré consistant en nitrure de silicium et en oxynitrure d'yttrium et de silicium (75% sous la forme d'une phase $Y_{10}$), et le frittage ultérieur du corps nitruré à une température suffisante pour former ledit corps à peut près entièrement dense.

3. Procédé selon la revendication 2, dans lequel la poudre formant une céramique, consiste en silicium.

4. Procédé selon la revendication 3, dans lequel le traitement thermique comprend la nitruration à une température de 1090 à 1430°C pendant une période appropriée pour former (a) des phases secondaires cristallines consistant en oxynitrure d'yttrium et de silicium, (b) du nitrure de silicium et (c) un revêtement mince d'alumino-silicate sur les grains de nitrure de silicium.

5. Procédé selon la revendication 4, dans lequel le traitement thermique comprend en outre le frittage à une température de 1650 à 1750°C pendant un temps suffisant pour densifier à peu près complètement et agglomérer le nitrure de silicium.

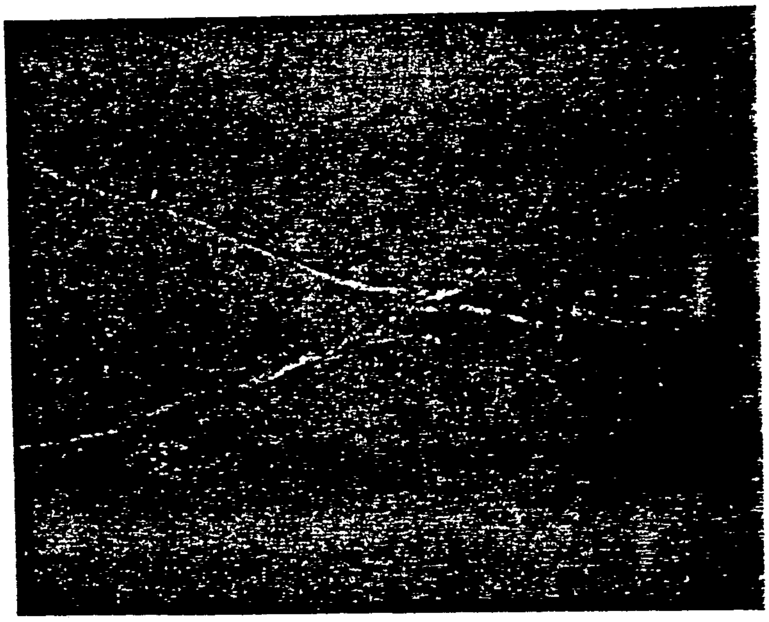

FIG.1

PHOTOGRAPH OF A NITRIDED PREFORM FABRICATED BY USE OF ALUMINUM STEARATE AS A PROCESSING AID DURING COLD-COMPACTION. PHOTOGRAPH WAS TAKEN AT 8X AND SHOWS SEVERE LAMINATION AND PRESENCE OF FREE SILICON.

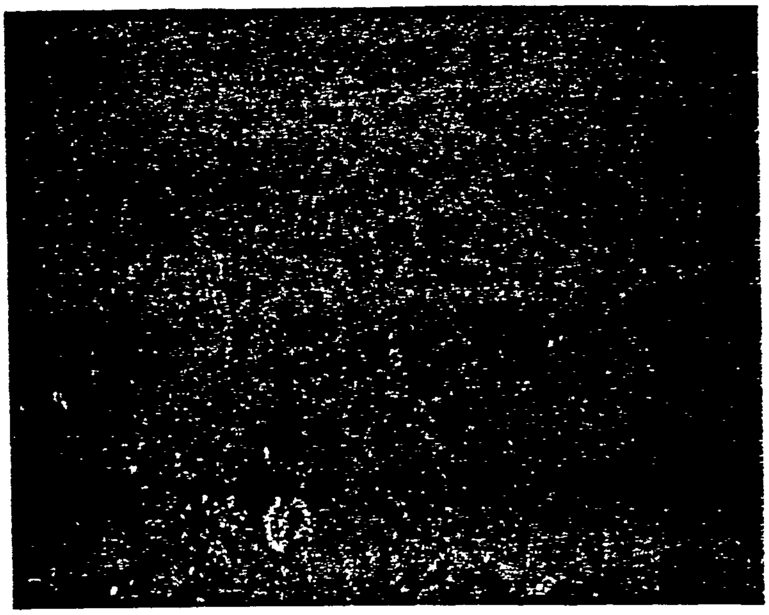

FIG.2

PHOTOGRAPH OF A NITRIDED POWDER PREFORM FABRICATED USING CARBOWAX 600 AS A PROCESSING AID FOR COLD-COMPACTION IN ACCORDANCE WITH THE PRIOR ART. THE PHOTOGRAPH WAS TAKEN AT 15X MAGNIFICATION AND SHOWS UNDESIRABLE SEGREGATED AREAS OF HIGH AND LOW yHRIUM AND ALUMINUM CONCENTRATION.

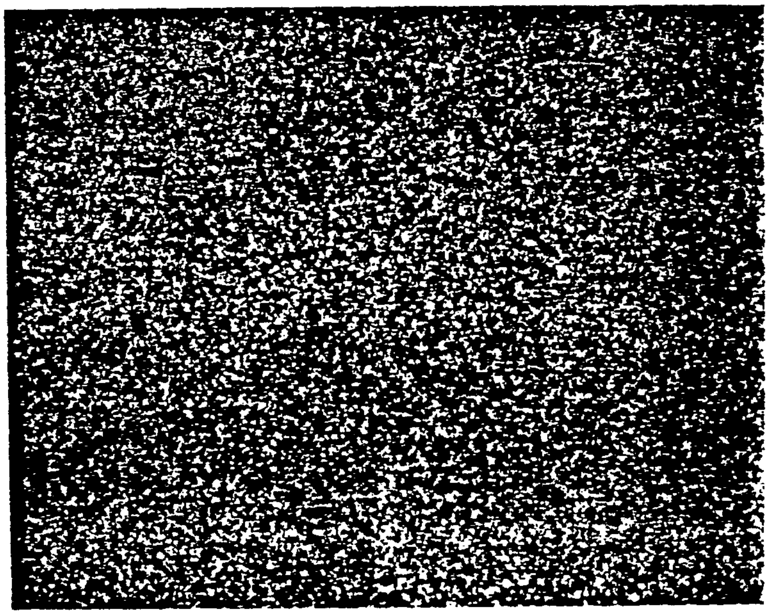

FIG.3

PHOTOGRAPH OF A NITRIDED POWDER PREFORM MADE IN CONFORMITY WITH THIS INVENTION USING A POLYMER OF 85% 2-ETHYLHEXYL ACRYLATE AND 15% HYDROXYPROPYL METHACRYLATE SHOWING HOMOGENEOUS NITRIDING AND ABSENCE OF LAMINATION. PHOTOGRAPH TAKEN AT 15X MAGNIFICATION.